# EUROPEAN PATENT APPLICATION

(11) **EP 3 127 413 A1**
(43) Date of publication of application: **08.02.2017**
(21) Application number: 15772652.2
(22) Date of filing: 25.03.2015
(51) Int. Cl.: A01B 69/00, G05D 1/02

(54) **COORDINATED TRAVEL WORK SYSTEM**

(30) Priority: 31.03.2014 JP 2014073716; 30.06.2014 JP 2014135417
(71) Applicant: Yanmar Co., Ltd., Osaka-shi, Osaka 530-8311 (JP)
(72) Inventor: YOKOYAMA Kazuhisa, Osaka-shi Osaka 530-8311 (JP); NAKAGAWA Wataru, Osaka-shi Osaka 530-8311 (JP)
(74) Representative: Jostarndt Patentanwalts-AG
(86) International application number: PCT/JP2015/059264
(87) International publication number: WO 2015/151982

(57) **Abstract**

Provided is an accompanying traveling work system in which work is performed by a manned work vehicle (100) that performs pre-process work ahead, and an unmanned first work vehicle (1) that performs post-process work, so that the manned traveling work vehicle can work ahead, and the first work vehicle (1) can performs post-process work while traveling in front of the second work vehicle (100), wherein the first work vehicle (1) includes a control device (30) that positions a machine body, utilizing a satellite positioning system, and causes the first work vehicle to automatically travel along a set traveling route R, and the first work vehicle (1) traveling diagonally in front includes markers (70R, 70L), which are landmarks for an advancing direction of the manned work vehicle traveling diagonally behind.

## Description

### Technical Field

The present invention relates to a control device of a work vehicle, and particularly to a control technique for allowing a second work vehicle to travel and work ahead of a first work vehicle in a case where the work is performed by the unmanned first work vehicle that autonomously travels, and the manned second work vehicle that travels, accompanying the first work vehicle.

### Background Art

Conventionally, a technique has been well known, in which driving operation is performed by an operator to a master vehicle with a slave vehicle as an unmanned vehicle, the master vehicle and the slave vehicle each include a control device, radio contacts between both the vehicles are enabled, and the slave vehicle includes a program that enables parallel driving to the master vehicle. Further, in the technique, the master vehicle and the slave vehicle include distance measuring devices to adjust a distance between the master vehicle and the slave vehicle to a predetermined distance (e.g., refer to PLT 1).

### Citation List

### Patent Literature

PTL1: JP 2001-507843 A1

### Summary of Invention

### Technical Problem

However, in the technique, since the slave vehicle is controlled so as to travel while keeping the set distance from the master vehicle, distortion of an advancing direction of the master vehicle leads to distortion of an advancing direction of the slave vehicle as well.

The present invention is achieved in light of the above-described situation, and an object of the present invention is to enable a manned work vehicle to work ahead, and an unmanned first work vehicle to travel and perform post-process work in a case where when two or more types of work are performed by two vehicles of the manned work vehicle and the unmanned work vehicle, the post-process work is desired to be proceeded more precisely than the pre-process work.

### Solution to Problem

The problem to be solved by the present invention is described above, and solutions to the problem will be now described.

According to the present invention, there is provided an accompanying traveling work system in which a first work vehicle advancing in front in a front-back direction, and a second work vehicle advancing behind the first work vehicle perform work while traveling in a same direction, wherein a control device of the first work vehicle and a control device of the second work vehicle can communicate through a communication device, the first work vehicle and the second work vehicle are provided with headland turning sensing means, and when the first work vehicle enters a headland turning region, the first work vehicle is controlled to stop the traveling and the work.

According to the present invention, when the second work vehicle ends headland turning, the traveling is stopped, a headland turning end signal of the second work vehicle is transmitted to the control device of the first work vehicle, and the first work vehicle is permitted to turn.

According to the present invention, when the first work vehicle ends the headland turning, a headland turning end signal is transmitted to the control device of the second work vehicle, and the second work vehicle is permitted to restart the traveling and the work.

According to the present invention, there is a provided an accompanying traveling work system in which work is performed by a manned second work vehicle that performs pre-process work ahead, and an unmanned first work vehicle that performs post-process work, wherein the first work vehicle includes a control device that positions a machine body, utilizing a satellite positioning system, and causes the first work vehicle to automatically travel along a set traveling route, and the first work vehicle traveling diagonally in front includes markers, which are landmarks for an advancing direction of the second work vehicle traveling diagonally behind.

According to the present invention, the markers can be attached to both right and left sides of the first work vehicle so as to be able to be protruded and contained.

According to the present invention, when the first work vehicle reaches a field end, the first work vehicle temporarily stops, and when after the second work vehicle has performed headland turning, the first work vehicle performs the headland turning, and reaches a front side of the second work vehicle, the control device of the first work vehicle projects the markers on a second vehicle side.

In the accompanying traveling work system, the control device causes a first satellite positioning system and a second satellite positioning system to position current positions of the first work vehicle and the second work vehicle, and causes a display device to display the positions of the first work vehicle and the second work vehicle, the first satellite positioning system being mounted on the first work vehicle, and the second satellite positioning system with a lower accuracy than that of the first satellite positioning system being mounted on a remote operation device carried in the second work vehicle.

### Advantageous Effects of Invention

By using the above-described technique, the first work vehicle can performs the work while traveling a precise route after the second work vehicle works, and the second work vehicle can travel substantially precisely with the markers serving as the landmarks.

### Brief Description of Drawings

Fig. 1 is a schematic side diagram showing a first work vehicle, GPS satellites, and a reference station.
Fig. 2 is a control block diagram.
Fig. 3 is a flowchart showing headland turning control.
Fig. 4 is a diagram showing a state of a field when accompanying work starts.
Fig 5 is a diagram showing a state before turning at a field end of the accompanying work.
Fig. 6 is a diagram showing a state after the turning at the field end in the accompanying work.
Fig. 7 is a diagram showing a state where a first work vehicle stops at a field end in a second embodiment of the accompanying work.
Fig. 8 is a diagram showing a state after a second work vehicle has turned at the field end in the second embodiment of the accompanying work.
Fig. 9 is a diagram showing a state after the first work vehicle has turned at the field end in the second embodiment of the accompanying work.
Fig. 10 is a control block diagram of another embodiment.
Fig. 11 is a diagram showing a state where a second work vehicle stops at a field end before turning in a third embodiment of the accompanying work.
Fig. 12 is a diagram showing a state where the second work vehicle stops at the field end after the turning in the third embodiment of the accompanying work.
Fig. 13 is a diagram showing a state where a first work vehicle stops at the field end after turning in the third embodiment of the accompanying work.

### Description of Embodiments

Provided is an accompanying work system in which if an advancing direction of a machine body is a front-back direction, a first work vehicle advancing in front, and a second work vehicle advancing behind the first work vehicle perform work while traveling in a same direction, and the unmanned first work vehicle 1 that can automatically travel, and the manned second work vehicle 100 that accompanies the first work vehicle, and an operator rides in to perform steering operation are tractors. An example in which a rotary tilling device 24 is attached as a work machine of the first work vehicle 1, and a cultivator 140 is attached to a second work vehicle 100 as a work machine will be described. That is, if a longitudinal direction of a field H is the front-back direction, shallow tillage is performed by the cultivator 140 in front, and then, tilling work is performed. However, each of the work vehicles is not limited to the tractor, but may be a combine harvester or the like. Moreover, the work machine is not limited to the rotary tilling device, but may be a furrower, a mower, a rake, a seeding machine, a fertilizer, a wagon or the like.

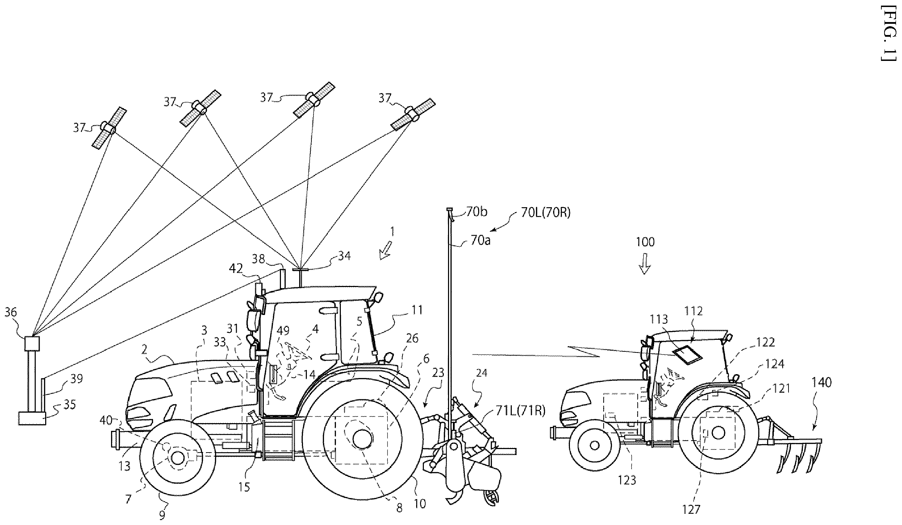

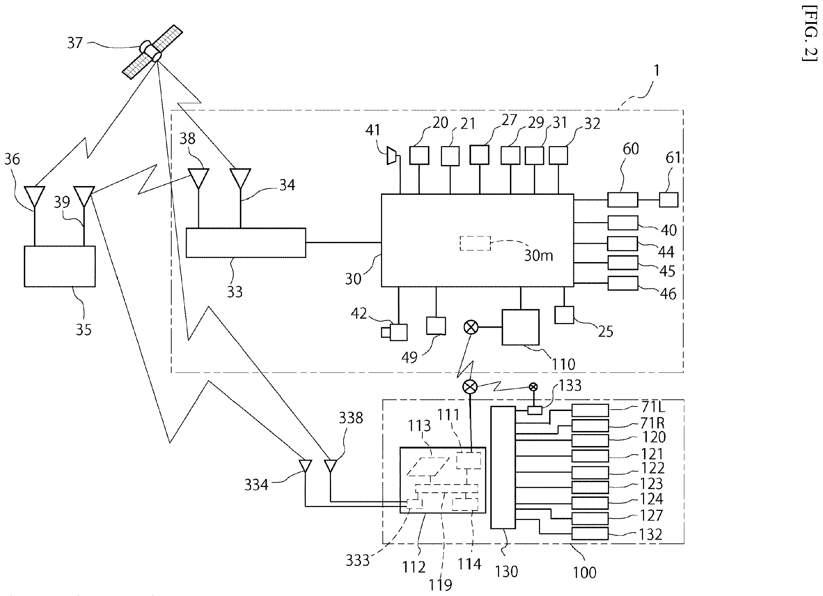

In Figs. 1 and 2, a whole configuration of a tractor, which is a first work vehicle 1, will be described. An engine 3 is provided inside a hood 2, a dashboard 14 is provided inside a cabin 11 in the rear of the hood 2, and a steering handle 4, which is steering operation means, is provided on the dashboard 14. Rotation of the steering handle 4 brings about rotation of a direction of front wheels 9, 9 through a steering device. A steering direction of the first work vehicle 1 is sensed by a steering sensor 20. The steering sensor 20 is made of an angle sensor such as a rotary encoder, and is disposed in a rotation base portion of the front wheels 9. However, a sensing configuration of the steering sensor 20 is not limited, but only needs to recognize the steering direction, and may sense the rotation of the steering handle 4, or may sense an operation amount of power steering. A detection value obtained by the steering sensor 20 is inputted to a control device 30. The control device 30 includes a CPU (Central Processing Unit), a storage device 30m such as a RAM, a ROM, an interface, and the like. Moreover, a program, data and the like for operating the first work vehicle 1 are stored in the storage device 30m.

A driver's seat 5 is provided in the rear of the steering handle 4, and a transmission case 6 is disposed under the driver's seat 5. Rear axle cases 8, 8 are continuously provided on both right and left sides of the transmission case 6, and rear wheels 10, 10 are borne through an axle by the rear axle cases 8, 8. Power from the engine 3 is subjected to speed change by a speed change device (a main speed change device and a sub-speed change device) inside the transmission case 6 to enable the rear wheels 10, 10 to be driven. The speed change device is made of, for example, a hydraulic continuously variable speed change device, and a movable swash plate of a variable displacement type hydraulic pump is actuated by speed change means 44 such as a motor to enable speed change. The speed change means 44 is connected to the control device 30. A rotation speed of the rear wheels 10 is sensed by a vehicle speed sensor 27, and is inputted to the control device 30 as a traveling speed. However, a method of sensing the vehicle speed and a disposition position of the vehicle speed sensor 27 are not limited.

A PTO clutch and a PTO speed change device are contained in the transmission case 6, and the PTO clutch is switched on/off by PTO on/off means 45, and the PTO on/off means 45 is connected to the control device 30 to enable connection/disconnection of power with respect to a PTO shaft to be controlled.

A front axle case 7 is supported by a front frame 13 supporting the engine 3, and the front wheels 9, 9 are borne on both sides of the front axle case 7, so that the power from the transmission case 6 can be transmitted to the front wheels 9, 9. The front wheels 9, 9 are steering wheels, can be rotated by rotation operation of the steering handle 4, and the front wheels 9, 9 can be rotated by right and left steering by a steering actuator 40 made of a power steering cylinder, which is driving means of the steering device. The steering actuator 40 is connected to the control device 30 to be controlled and driven by automatic traveling means.

An engine controller 60, which is engine rotation control means, is connected to the control device 30, and an engine rotation speed sensor 61, a water temperature sensor, a hydraulic sensor and the like are connected to the engine controller 60, so that a state of the engine can be sensed. In the engine controller 60, a load is detected from a set rotation speed and an actual rotation speed, the control is performed to prevent overload, and the state of the engine 3 is transmitted to a remote operation device 112 described later so as to be able to be displayed on a display 113.

Moreover, a level sensor 29 that senses a liquid surface of fuel is disposed in a fuel tank 15 disposed below a step, and is connected to the control device 30. A fuel gauge that displays a residual amount of the fuel is provided in display means 49 provided in the dashboard of the first work vehicle 1, and is connected to the control device 30. Information of the fuel residual amount is transmitted to the remote operation device 112 from the control device 30, so that the fuel residual amount and workable time are displayed on the display 113 of the remote operation device 112.

The display means 49 that displays a rotation speed meter of the engine, the fuel gauge, an oil pressure and the like, a monitor showing abnormality, setting values and so on is disposed on the dashboard 14.

Moreover, the rotary tilling device 24 is configured to perform tilling work as a work machine by being attached in the rear of a tractor body through a work machine attachment device 23 so as to be freely raised and lowered. A raising/lowering cylinder 26 is provided on the transmission case 6, and extending and contracting the raising/lowering cylinder 26 allows a raising/lowering arm making up the work machine attachment device 23 to rotate, so that the rotary tilling device 24 can be raised/lowered. The raising/lowering cylinder 26 is extended and contracted by actuation of a raising/lowering actuator 25, which is connected to the control device 30.

A mobile communicator 33 making up a satellite positioning system is connected to the control device 30. A mobile GPS antenna 34 and a data receiving antenna 38 are connected to the mobile communicator 33, and the mobile GPS antenna 34 and the data receiving antenna 38 are provided above the cabin 11. The mobile communicator 33 includes position calculation means, and transmits latitude and longitude to the control device 30, so that a current position can be grasped. While utilizing a satellite positioning system (GNSS) such as a quasi-zenith satellite (Japan), a GLONASS satellite (Russia) as well as a GPS (USA) enables highly accurate positioning, in the present embodiment, a description will be given, using the GPS.

The first work vehicle 1 includes a gyro sensor 31 to obtain posture change information of the machine body, and an azimuth sensor 32 to sense an advancing direction, which sensors are connected to the control device 30. However, since the advancing direction can be calculated from position measurement by the GPS, the azimuth sensor 32 can be omitted.

The gyro sensor 31 detects an angular velocity of inclination in a front-back direction (pitch) of the machine body of the first work vehicle 1, an angular velocity of inclination in a right-left direction (roll) of the machine body, and an angular velocity of turning (yaw). The three angular velocities are subjected to integral calculation, by which inclination angles in the front-back direction and in the right-left direction, and the turning angle of the machine body of the first work vehicle 1 can be found. As specific examples of the gyro sensor 31, a mechanical type gyro sensor, an optical type gyro sensor, a fluid type gyro sensor, a vibration type gyro sensor and the like are cited. The gyro sensor 31 is connected to the control device 30 to input information of the three angular velocities to the control device 30.

The azimuth sensor 32 detects an orientation (the advancing direction) of the first work vehicle 1. As specific examples of the azimuth sensor 32, a magnetic azimuth sensor and the like are cited. The azimuth sensor 32 is connected to the control device 30 to input information of the orientation of the machine body to the control device 30.

In this manner, the control device 30 arithmetically operates signals acquired from the gyro sensor 31, and the azimuth sensor 32 by posture/azimuth arithmetic operation means to find a posture of the first work vehicle 1 (the orientation, the inclinations in the front-back direction and in the right-left direction, and the turning direction of the machine body).

Next, a method for acquiring position information of the first work vehicle 1, using the GPS (Global Positioning System) will be described.

The GPS is a system originally developed for navigation support of an airplane, a ship and the like, and is made up of 24 GPS satellites that orbit at an altitude of about 20,000 kilometers in the sky (four are disposed in each of six raceway surfaces), a control station to perform tracking and control of the GPS satellites, and a communicator of a user to perform positioning.

As positioning methods using the GPS, various methods such as independent positioning, relative positioning, DGPS (Differential GPS) positioning, RTK-GPS (Real-Time Kinematic-GPS) positioning are cited, and any of these methods can be used. In the present embodiment, the RTK-GPS positioning method (a first satellite positioning system), which has a high measurement accuracy, is employed to position the current position of the first work vehicle 1. Moreover, an operator rides in a second work vehicle, carrying the remote operation device 112 that includes a communicator 333, a GPS antenna 334, and a data communication antenna 338, and enables the relative positioning (D-GPS positioning, a second satellite positioning system). A relative position between the first work vehicle 1 and the remote operation device 112 is enabled to be detected by an inexpensive D-GPS sensor, although the accuracy is lower than that of the RTK-GPS positioning method. The relative position is enabled to be displayed on the display device 113 of the remote operation device 112. The operator can grasp the relative position between the first work vehicle 1 and a second work vehicle 100 while operating the remote operation device 112, so that a situation where both the vehicles become too close, a situation where both the vehicles become too far away, or the like can be easily recognized.

The method of the RTK-GPS positioning will be described with reference to Figs. 1, 2.

The RTK-GPS (Real-Time Kinematic-GPS) positioning is a method in which GPS observation is simultaneously performed at a reference station whose position is known, and at a mobile station whose position is to be found, and data observed at the reference station is transmitted to the mobile station by a method of radio communication or the like in real time to find the position of the mobile station in real time, based on a position result of the reference station.

In the present embodiment, the mobile communicator 33, which is the mobile station, the mobile GPS antenna 34, and the data receiving antenna 38 are disposed in the first work vehicle 1, and a fixed communicator 35, which is the reference station, a fixed GPS antenna 36, and a data transmission antenna 39 are disposed at a predetermined position where they do not disturb work in the field. In the RTK-GPS (Real-Time Kinematic-GPS) positioning in the present embodiment, measurement (relative positioning) of a phase is performed both in the reference station and in the mobile station, and data obtained by positioning in the fixed communicator 35 as the reference station is transmitted from the data transmission antenna 39 to the data receiving antenna 38.

The mobile GPS antenna 34 disposed in the first work vehicle 1 receives signals from GPS satellites 37, 37, ···. These signals are transmitted to the mobile communicator 33 and positioned. At the same time, the signals from the GPS satellites 37, 37, ··· are received by the fixed GPS antenna 36 as the reference station to be positioned in the fixed communicator 35 and be transmitted to the mobile communicator 33, and observed data is analyzed to decide a position of the mobile station. The position information obtained in this manner is transmitted to the control device 30.

In this manner, the control device 30 in the first work vehicle 1 includes automatic traveling means for automatic traveling, and the automatic traveling means receives radio waves transmitted from the GPS satellites 37, 37, ··· to find position information of the machine body at set time intervals in the mobile communicator 33 and to find displacement information and azimuth information of the machine body from the gyro sensor 31 and the azimuth sensor 32. Based on the position information, the displacement information, and the azimuth information, the steering actuator 40, the speed change means 44, the raising/lowering actuator 25, the PTO on/off means 45, the engine controller 60 and the like are controlled so that the machine body travels along a set route R set in advance, by which the first work vehicle 1 can automatically travel and automatically work. Position information (map information) of an outer periphery of the field H, which is a work range, is also set in advance by a well-known method, and is stored in the storage device 30m.

Moreover, in the D-GPS positioning between the remote operation device 112 and the mobile station, the independent positioning is performed at both points, a positioning error is found in the reference station, and correction information thereof is transmitted to the remote operation device 112 through the data communication antenna 338, so that correction is performed to find a position of the remote operation device 112. The position of the remote operation device 112 and the position of the autonomous traveling work vehicle 1 are enabled to be displayed on the display device 113 or the display means 49, and a separation distance between them is arithmetically operated, so that relative positions of the autonomous traveling work vehicle 1 and the accompanying traveling work vehicle 100 can be easily recognized.

Moreover, an obstacle sensor 41 is disposed in the first work vehicle 1, and is connected to the control device 30 to prevent the first work vehicle 1 from abutting on an obstacle. For example, the obstacle sensor 41 is made of a laser sensor or a ultrasonic wave sensor, and is disposed in a front portion, a side portion, or a rear portion of the machine body. Further, the obstacle sensor 41 is connected to the control device 30 to detect whether or not an obstacle exists in front of, beside, or in the rear of the machine body, and controls to stop traveling if the obstacle approaches within a set distance.

Moreover, a camera 42 that photographs a front side, a rear side, and the work machine is mounted on the first work vehicle 1, and is connected to the control device 30. A video photographed by the camera 42 is displayed on the display 113 of the remote operation device 112 included in the second work vehicle 100. However, when a display screen of the display 113 is small, the camera video can be displayed on another large display, can be displayed always or selectively on another dedicated display, or can also be displayed on the display means 49 provided in the first work vehicle 1. The camera 42 may be configured such that one camera 42 is disposed, centering on the machine body, and is rotated around a vertical axis to photograph surroundings, or such that a plurality of cameras 42 are disposed at a front portion, at a rear portion or at four corners of the machine body to photograph the machine surroundings. Thus, the camera 42 is not limited.

Markers 70L, 70R are disposed on both right and left sides of the rotary tilling device 24, which is the work machine, and can be protruded and contained. That is, in the markers 70L, 70R, base portions of rod-like bodies 70a, 70a is pivotably supported by right and left beams of the rotary tilling device 24 or right and left side portions of a tilling cover, and the rod-like bodies 70a, 70a are coupled to actuators 71L, 71R made up of electric power cylinders and the like. Actuating the actuators 71L, 71R enables the markers 70L, 70R to be elevated and rotated. The actuators 71L, 71R are connected to the control device 30 to be driven and raised/lowered at the time of headland turning described later. Weight bodies 70b are provided at forefront ends of the rod-like bodies 70a, 70a so as to enable the worker to visually recognize the weight bodies 70b as landmarks with ease. Attachment positions of the markers 70L, 70R are not limited to a work machine 140, but the markers 70L, 70R can be attached to the front frame 13, fenders or the like on the machine side.

The remote operation device 112 sets the traveling route R of the first work vehicle 1, remotely operates the first work vehicle 1, monitors a traveling state of the first work vehicle 1 and an actuation state of the work machine, and stores work data.

The operator rides in the second work vehicle 100, which is a manned travelling vehicle, to operate and drive the second work vehicle 100, and the remote operation device 112 is mounted on the second work vehicle 100 to enable the first work vehicle 1 to be operated. A basic configuration of the second work vehicle 100 is substantially the same as that of the first work vehicle 1, and thus, detailed description is omitted. A configuration can also be employed in which the second work vehicle 100 includes the mobile communicator 33 and the mobile GPS antenna 34 for the GPS.

The remote operation device 112 can be attached and detached with respect to operation portions such as dashboards of the second work vehicle 100 and the first work vehicle 1. The remote operation device 112 can be operated in a state being attached to the dashboard of the second work vehicle 100, can be operated in a state where it is taken out of the second work vehicle 100 and is carried, or can be operated in a state being attached to the dashboard of the first work vehicle 1. The remote operation device 112 can be made of, for example, a notebook type or tablet type personal computer. In the present embodiment, the remote operation device 112 is made of a tablet type computer.

Furthermore, the remote operation device 112 and the first work vehicle 1 are configured communicably to each other by radio, and the first work vehicle 1 and the remote operation device 112 are provided with transceivers 110, 111 for communication, respectively. The transceiver 111 is configured integrally with the remote operation device 112. Communication means is configured mutually communicably, for example, by a radio LAN such as WiFi. The remote operation device 112 is provided with the display 113 on a housing surface, which display is a touch panel type operation screen that can be operated by touching the screen, and the transceiver 111, a CPU, a storage device, a battery and the like are contained in a housing. On the display 113, the image of the surroundings photographed by the camera 42, the state of the first work vehicle 1, the state of the work, the information regarding the GPS, the operation screen and the like can be displayed, so that the operator can monitor them.

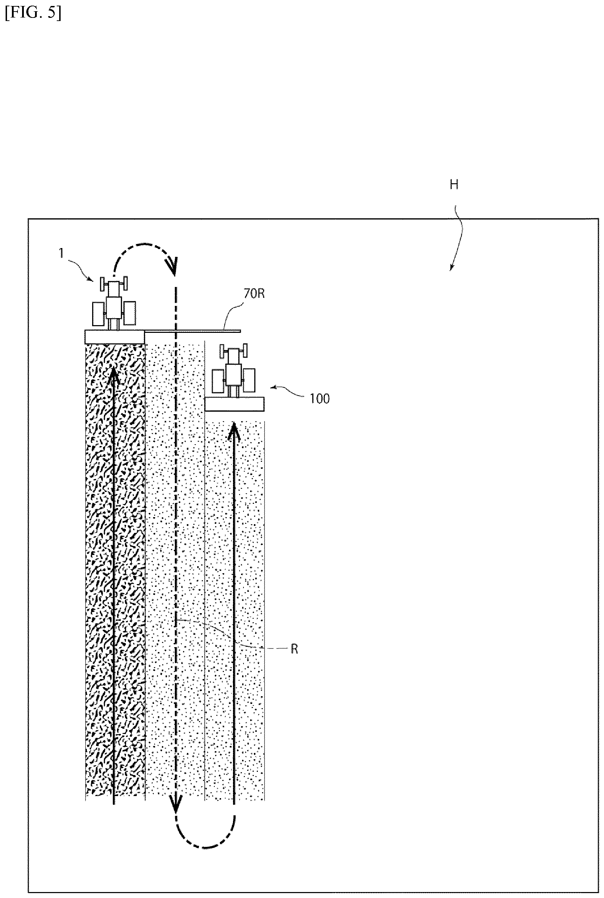

As shown in Fig. 5, the first work vehicle 1 travels along the set traveling route R, and the second work vehicle 100 travels diagonally behind the first work vehicle 1 so as to work while monitoring the first work vehicle 1.

Moreover, the first work vehicle 1 can be remotely operated by the remote operation device 112. For example, the operation of the remote operation device 112 enables emergency stop, temporary stop, restarting, change of vehicle speed, change of engine rotation speed, raising/lowering of the work machine, on/off of the PTO clutch and the like of the first work vehicle 1 to be operated. That is, an axel actuator, the speed change means 44, the PTO on/off means 45 and the like are controlled from the remote operation device 112 through the transceiver 111, the transceiver 110, and the control device 30, so that the worker can remotely operate the first work vehicle 1 with ease.

Moreover, the second work vehicle 100 is provided with a control device 130, which can be communicated with the remote operation device 112 through a communication device 133. Moreover, the second work vehicle 100 is provided with a steering sensor 120 configured similarly to the steering sensor 20 of the first work vehicle 1, and the steering sensor 120 is connected to the control device 130. Steering operation of a steering handle of the second work vehicle 100 is sensed by the steering sensor 120 to be inputted to the control device 130. A steering operation signal from the steering sensor 120 is transmitted from the control device 130 to the remote operation device 112 through the communication device 133, and the control device 130 of the remote operation device 112 determines whether or not the machine body has performed headland turning from the steering operation signal (a case where the headland turning is determined, based on a detection value of the steering sensor as headland turning sensing means is a first example). For example, in the headland turning, the steering handle is rotated to the utmost, and the second work vehicle 100 travels a predetermined distance, and then, the steering handle is returned to change the direction of the machine body at 180 degrees. Accordingly, the headland turning can be recognized easily. This steering sensor 120 is made of an angle sensor such as a rotary encoder similarly to the steering sensor 20 of the first work vehicle 1, and is configured to sense rotation of steering devices such as the front wheels 9, a knuckle arm, and a steering handle 4 or to sense an operation amount of power steering. The steering sensor 120 is not limited, as long as it recognizes the steering direction. However, determination of end of the headland turning of the second work vehicle 100 may be performed by the control device 30 or may be performed by the control device 130.

Moreover, a configuration may be employed in which in order to determine the headland turning, an azimuth sensor 132 is included in the second work vehicle 100 (a case where the headland turning is determined, based on a detection value of the azimuth sensor as the headland turning sensing means is a second example). The azimuth sensor 132 is connected to the control device 130. In this manner, when the second work vehicle 100 is turned to change an advancing direction, an azimuth of the advancing direction is sensed by the azimuth sensor 132 to be inputted to the control device 130. From the control device 130, an azimuth signal is transmitted to the remote operation device 112 through the communication means, and the control device of the remote operation device 112 determines, from the azimuth signal, whether or not the machine body has performed the headland turning. For example, it is found from the azimuth sensor 132 that the direction of the machine body is gradually changed and at last, the orientation is changed at 180 degrees, by which the headland turning can be easily recognized.

Moreover, in order to determine the headland turning, the second work vehicle 100 may be photographed by the camera 42 provided in the first work vehicle 1 to determine whether or not the headland turning has been performed from the video (a case where the headland turning is determined, based on a detection value of the camera as the headland turning sensing means is a third example). The camera 42 may be provided above a cabin 11 of the second work vehicle 100 to photograph a diagonal front side, or may be disposed, centering on the machine body, and be rotated to photograph an outer periphery. In this manner, an image photographed by the camera 42 in a state where the first work vehicle 1 comes before the headland, and is stopped is inputted to the control device 30, and the control device 30 performs image processing to determine whether or not the second work vehicle 100 exists diagonally in front. If the video of the second work vehicle 100 is reversed back to front in the state where the first work vehicle 1 stops at the headland, the control device 30 of the first work vehicle 1 determines that the headland turning of the second work vehicle 100 has ended.

Moreover, in order to determine the headland turning, work machine raising/lowering sensing means for sensing raising/lowering of the work machine 140 of the second work vehicle 100 can also be provided to determine the end of the headland turning, based on the lowering of the work machine after the headland turning (a case where the headland turning is determined, based on a detection value of the work machine raising/lowering sensing means as the headland turning sensing means is a fourth example). That is, the work machine raising/lowering sensing means of the second work vehicle 100 is a raising/lowering switch, an angle sensor 121 that senses the rotation of the work machine attachment device (a lift arm or a lower link), and the like, and raises the work machine when the second work vehicle 100 reaches a field end, and lowers the work machine after the headland turning. A raising signal and a lowering signal of the work machine are transmitted to the control device 30 of the first work vehicle 1, so that the first work vehicle 1 determines that the headland turning has ended, based on the lowering of the work machine of the second work vehicle 100.

Moreover, in order to determine the headland turning, PTO on/off sensing means 124 for sensing on/off of the PTO of the work machine in place of the raising/lowering of the work machine may be provided to determine the end of the headland turning, based on a signal of on/off (a case where the headland turning is determined, based on a detection of the PTO on/off sensing means as the headland turning sensing means is a fifth example).

Moreover, in order to determine the headland turning, a vehicle speed sensor 127 may be provided as traveling speed sensing means for sensing a traveling speed of the second work vehicle 100 to determine the end of the headland turning from the vehicle speed or increase/decrease of the vehicle speed (a case where the headland turning is determined, based on a detection value of the traveling speed sensing means as the headland turning sensing means is a sixth example). That is, the second work vehicle 100, when approaching the field end, decreases the traveling speed (or further stops), and raises the work machine and turns at a low speed (a set headland turning speed). Further, when the headland turning ends, the second work vehicle 100 stops to lower the work machine, and is accelerated to a work speed to restart the work. In this manner, the end of the headland turning can be determined.

Moreover, in order to determine the headland turning, in place of the traveling speed sensing means, speed change position detection means 122 for sensing a speed change position of the second work vehicle 100 may be provided to determine the end of the headland turning, based on change of a speed change position signal (a case where the headland turning is determined, based on a detection value of the speed change position detection means as the headland turning sensing means is a seventh example).

Moreover, in order to determine the headland turning, engine rotation speed sensing means 123 for sensing an engine rotation speed of the second work vehicle 100 in place of the work traveling speed may be provided to determine the end of the headland turning, based on the rotation speed or increase/decrease of the rotation speed (a case where the headland turning is determined, based on a detection value of the engine rotation speed sensing means as the headland turning sensing means is an eighth example).

Moreover, the second work vehicle 100 can be provided with a mobile receiver, a mobile GPS antenna, and a data receiving antenna to detect position information of the second work vehicle 100 by the satellite positioning system, and the position information can be used as means for sensing the headland turning. A position where the headland turning ends is determined to be the end of the headland turning (a case where the headland turning is determined, based on the position information by the satellite positioning system as the headland turning sensing means is a ninth example).

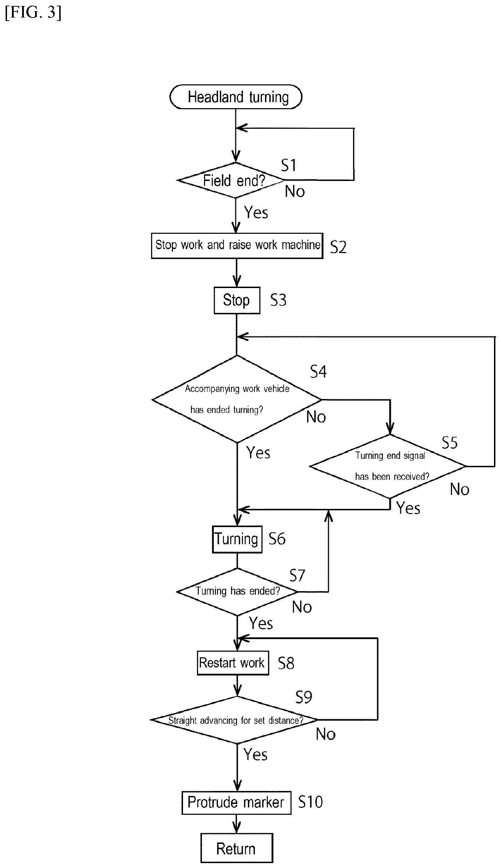

Next, accompanying work will be described with reference to Figs. 3 to 6.

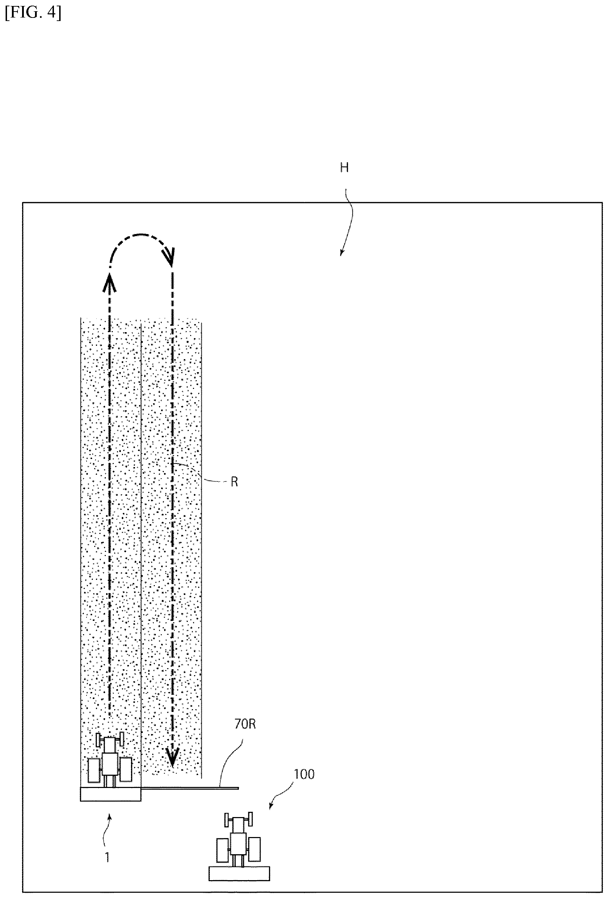

First, as shown in Fig. 4, the second work vehicle 100 ends one round-trip work ahead, and then, performs the headland turning to stop at the field end. Thereafter, the first work vehicle 1 enters the field H to stop at a work start position. At this time, the first work vehicle 1 is located in front of the second work vehicle 100 so that the marker 70R does not hit the second work vehicle 100 when the marker 70R is protruded. At these positions of both the vehicles, the operator rides in the second work vehicle 100, and operates a work start switch to start the accompanying work by the first work vehicle 1 and the second work vehicle 100. The forefront end of the marker 70R is located at a right-left center of the second work vehicle 100.

Next, control of the headland turning in the accompanying work will be described with reference to Figs. 3, 5, 6.

When the work is proceeded and the first work vehicle 1 reaches the field end as shown in Fig. 5 (S1), the first work vehicle 1 stops the work to raise the rotary tilling device 24 (S2), and temporarily stops (S3). At the same time that this rotary tilling device 24 is raised, the markers 70L, 70R are also raised and contained so as not to disturb the traveling of the second work vehicle 100. At the standby position where the traveling is stopped, the first work vehicle 1 waits for the turning end of the second work vehicle 100. This is because if the first work vehicle 1 performs the headland turning and stops at the next start position first, there is a risk that the work machines abut on each other before the second work vehicle 100 performs the headland turning. The stop of the work is control by the control device 30 actuating the PTO on/off means 45 to cut off the power to the PTO shaft, the raising of the work machine is control by the control device 30 actuating the raising/lowering actuator 25 to extend the raising/lowering cylinder 26, the traveling stop is control by the control device 30 actuating the speed change means 44 and a braking device 46 to set the traveling speed to 0, and the lowering of the work machine is control by the control device 30 actuating the raising/lowering actuator 25 to contract the raising/lowering cylinder 26. Hereinafter, for the stop of the work, the raising of the work machine, the lowering of the work machine, and the stop of the traveling (in both the first work vehicle 1 and the second work vehicle 100), similar control is performed.

When entering a headland turning region U while continuing the work, the second work vehicle 100 raises the work machine 140 and performs the headland turning. As to the determination of the turning end of the second work vehicle 100, as the first example, the case where the headland turning is sensed by the steering sensor 120 provided in the second work vehicle 100 will be described. In the second to ninth examples, the headland turning can be determined similarly to the foregoing, and replacement is possible. The signal from the steering sensor 120 is transmitted to the remote operation device 112 through the control device 130, the communication devices 133, 111, and the control device of the remote operation device 112 determines whether or not the headland turning has been performed (S4).

If the headland turning has not been performed, whether or not the operator of the second work vehicle 100 has issued an end signal is determined (S5). That is, a turning end confirmation switch 114 is provided in the dashboard of the second work vehicle 100 or the remote operation device 112, and the operator turns on the turning end confirmation switch 114, by which a restart signal is transmitted to the first work vehicle 1, and the control device 30 of the first work vehicle 1 determines that the headland turning has ended. The operator arbitrarily operates the turning end confirmation switch 114 to start the turning of the first work vehicle 1, and for example, even before the second work vehicle 100 has ended the turning, or even during the turning, the turning end confirmation switch 114 is turned on if there is not a risk that both the work vehicles interfere with each other, by which the turning end is forcibly determined to turn the first work vehicle 1. In this manner, time when the first work vehicle 1 waits can be saved, so that work time can be shortened.

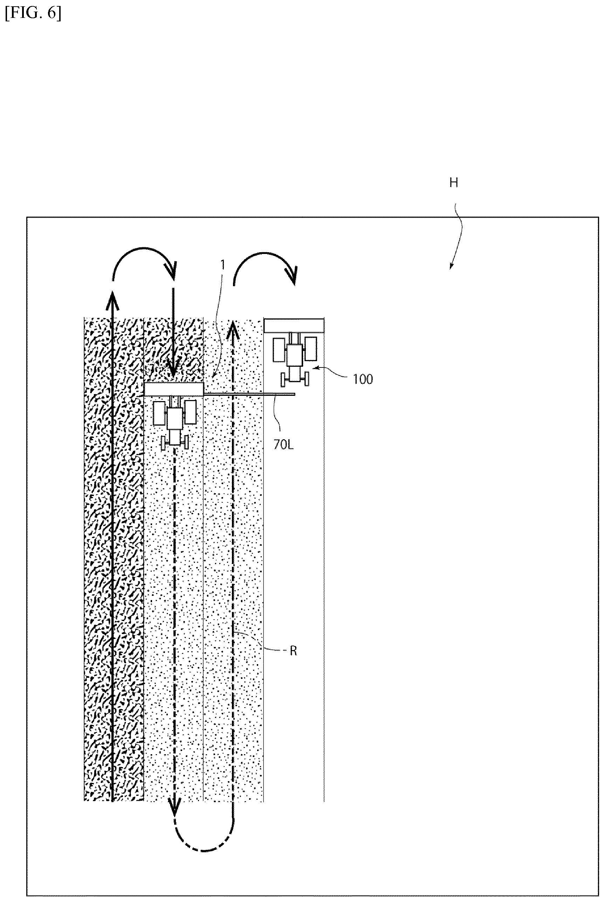

When the headland turning of the second work vehicle 100 ends and stops, and the work restart signal is transmitted, the first work vehicle 1 starts the turning (S6), and when the turning ends, as shown in Fig. 6 (S7), the work is restarted (S8). When the first work vehicle 1 travels a set distance (S9), the maker 70L on the second work vehicle 100 side is protruded (S10). That is, the first work vehicle 100 overtakes the second work vehicle 100, and lowers and rotates the marker 70L to protrude the same at a position where the marker 70L does not hit the second work vehicle 100. The second work vehicle 100 travels with this marker 70L used as a target, and restarts the work. The traveling start is control by the control device 30 releasing the braking of the braking device 46, and actuating the speed change means 44 to increase the traveling speed to a set work speed, and the start or the restart of the work is control by the control device 30 actuating the PTO on/off means 45 to transmit the power to the PTO shaft. Hereinafter, for the traveling start and the start/restart of the work (in both the first work vehicle 1 and the second work vehicle 100), similar control is performed.

As described above, the present invention provides an accompanying work system in which the work is performed by the manned work vehicle 100 that performs pre-process work ahead, and the unmanned first work vehicle 1 that performs post-process work, wherein the first work vehicle 1 includes the control device 30 that positions of the machine body, utilizing the satellite positioning system, and causes the first work vehicle 1 to automatically travel along the set traveling route R. The first work vehicle 1 traveling diagonally in front includes the markers 70R, 70L, which are landmarks for the advancing direction of the manned work vehicle travelling diagonally behind, so that the operator can perform the work while operating the two vehicles, which can shorten the time of the work, and the manned work vehicle 100 can precisely travel and perform the work with the markers 70R, 70L used as targets. Moreover, the tractor possessed conventionally need hardly be changed, and only adding the autonomous traveling work vehicle 1 and the remote operation device 112 allows one person to operate the two tractors, which can increase efficiency of the work.

Moreover, since the markers 70R, 70L are attached so as to be able to be protruded and contained on both the right and left sides of the first work vehicle 1, the markers 70R, 70L are contained at the time of turning or at the time other than the work so as not to interfere, and can serve as the traveling targets of the manned work vehicle 100 during work.

When the first work vehicle 1 reaches the field end, the control device 30 of the first work vehicle 1 temporarily stops the first work vehicle 1, and causes the first work vehicle 1 to perform the headland turning after the manned work vehicle has performed the headland turning. When the first work vehicle 1 reaches the front side of the manned work vehicle, the control device 30 projects the markers 70R, 70L to the manned work vehicle side. This makes it unnecessary for the operator to operate the markers 70R, 70L, which can increase the work efficiency.

### <Second embodiment>

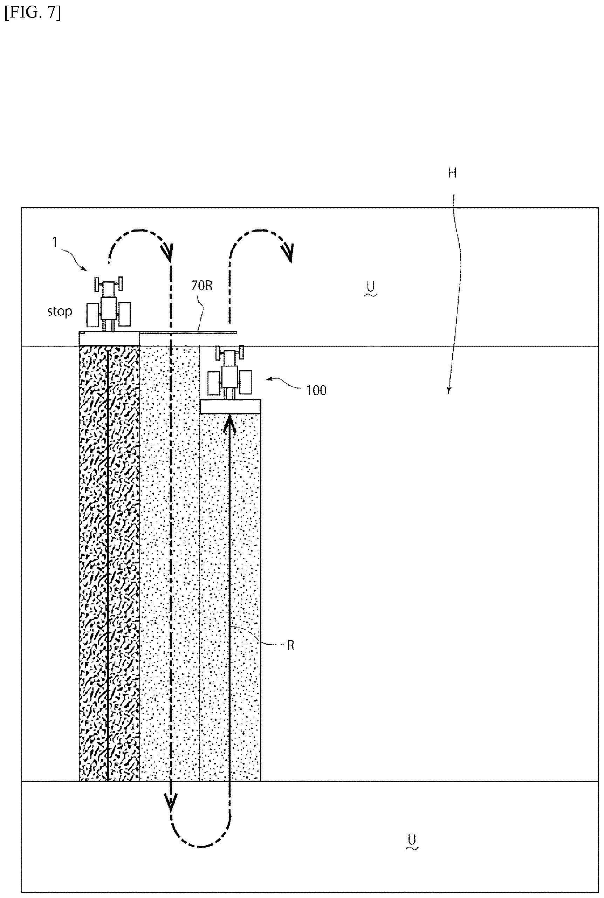

A second embodiment of the turning control by a first work vehicle 1 and a second work vehicle 100 will be described. As shown in Fig. 7, in a storage device 30m of a control device 30, a headland turning region U is set on a field end side of a set traveling route R. Work is started by the first work vehicle 1 and the second work vehicle 100, and when the first work vehicle 1 enters the headland turning region U at a field end, the control device 30 of the first work vehicle 1 actuates speed change means 44 and a braking device 46 to stop traveling, actuates PTO on/off means 45 to stop the work, and actuates a raising/lowering actuator 25 to raise a rotary tilling device 24. At this time, a maker 70 is contained. Whether or not the first work vehicle 1 has entered (or has gone out of) the headland turning region U can be determined from position information of the first work vehicle 1 by a satellite positioning system.

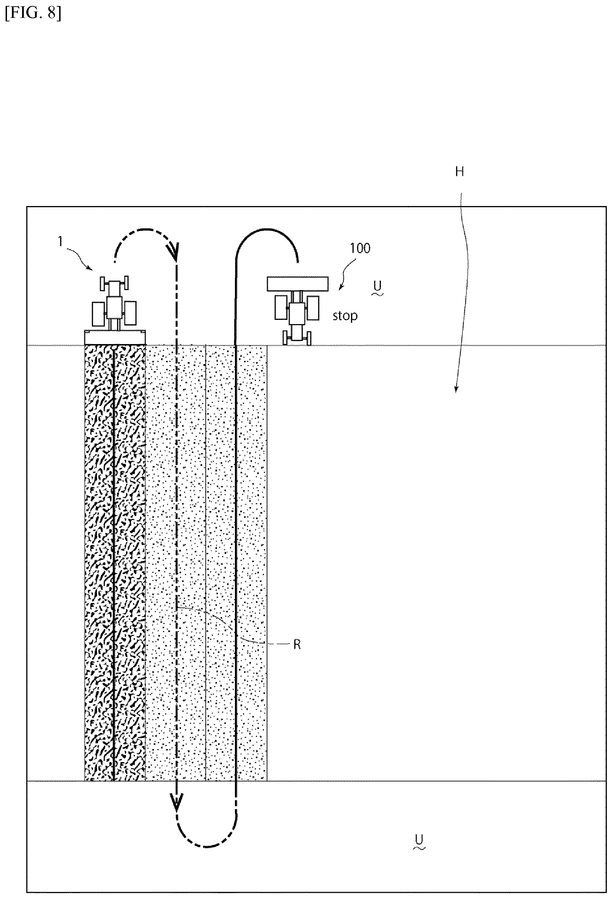

The second work vehicle 100 performs the headland turning in a state where the first work vehicle 1 stops, and when the headland turning is ended, the second work vehicle 100 stops traveling as shown in Fig. 8. The second work vehicle 100 stops inside the headland turning region U.

A headland turning end signal of the second work vehicle 100 is transmitted to the control device 30 of the first work vehicle 1 to permit the headland turning of the first work vehicle 1, and the first work vehicle 1 actuates the speed change means 44 to start the headland turning at a turning speed. The determination of the end of the headland turning of the second work vehicle 100 is performed by the detection means in the first to ninth examples. For example, in the first example, if continuation of straight traveling for a set distance is found from the steering sensor 120, the headland turning end is determined.

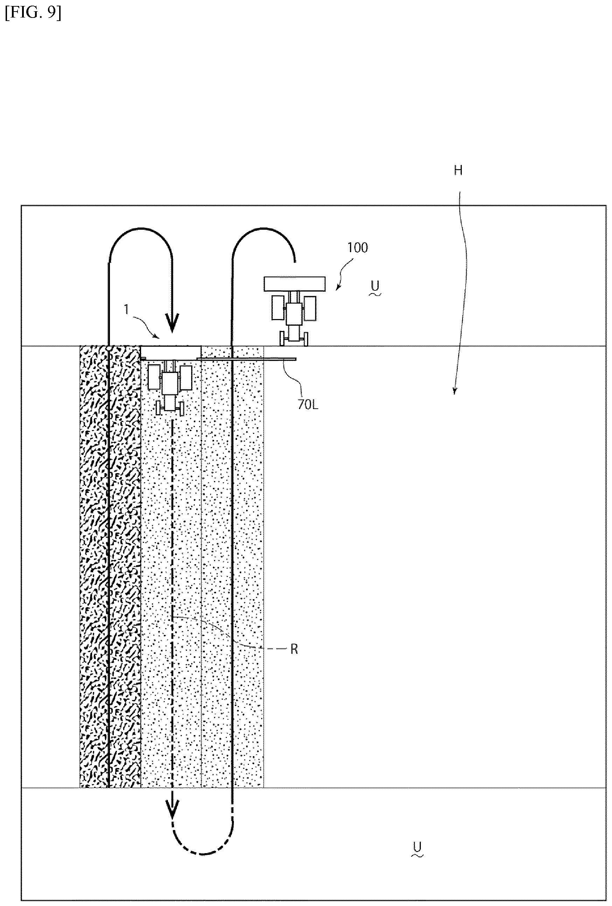

As shown in Fig. 9, when the first work vehicle 1 goes out of the headland turning region U, the raising/lowering actuator 25 is actuated to lower the rotary tilling device 24, and the marker 70L on an opposite side in the right-left direction (on a second work vehicle 100 side) is protruded. At the same time, the control device 30 transmits the headland turning end signal to the second work vehicle 100 and the remote operation device 112 through a communication device 110 to permit the traveling and the work of the second work vehicle 100, and the second work vehicle 100 restarts the traveling and the work. In this manner, every time the vehicle reaches the headland, the headland turning control is performed.

### <Third embodiment>

A third embodiment of the turning control in a case where a first work vehicle 1 and a second work vehicle 100 travel in the same set traveling route R to perform the same work or different types of work, and the first work vehicle 1 is unmanned and the second work vehicle 100 is unmanned or manned will be described.

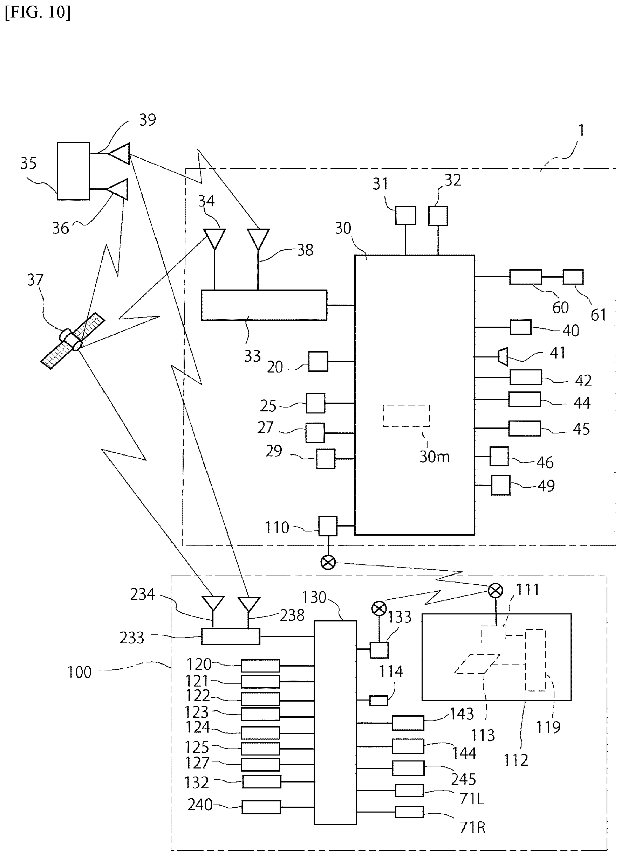

As shown in Fig. 10, the first work vehicle 1 and the second work vehicle 100 are provided with mobile receivers 33, 233, mobile GPS antennas 34, 234, and data receiving antennas 38, 238, respectively, and position information of the first work vehicle 1 and the second work vehicle 100 can be detected by a satellite positioning system. Furthermore, as in the first work vehicle 1, in the second work vehicle 100 as well, a raising/lowering actuator 125, traveling stop means 143, speed change means 144, a steering actuator 240, and PTO on/off means 245 are provided and are connected to a control device 130, which enables the first work vehicle 1 and the second work vehicle 100 to be automatically turned without operation by an operator at the time of turning.

That is, the work is started by the first work vehicle 1 and the second work vehicle 100, and when the first work vehicle 1 enters a headland turning region U at a field end, as in the second embodiment, a control device 30 of the first work vehicle 1 actuates speed change means 44 and a braking device 46 to stop traveling, actuates PTO on/off means 45 to stop the work, and actuates a raising/lowering actuator 25 to raise a rotary tilling device 24. At this time, a maker 70 is contained.

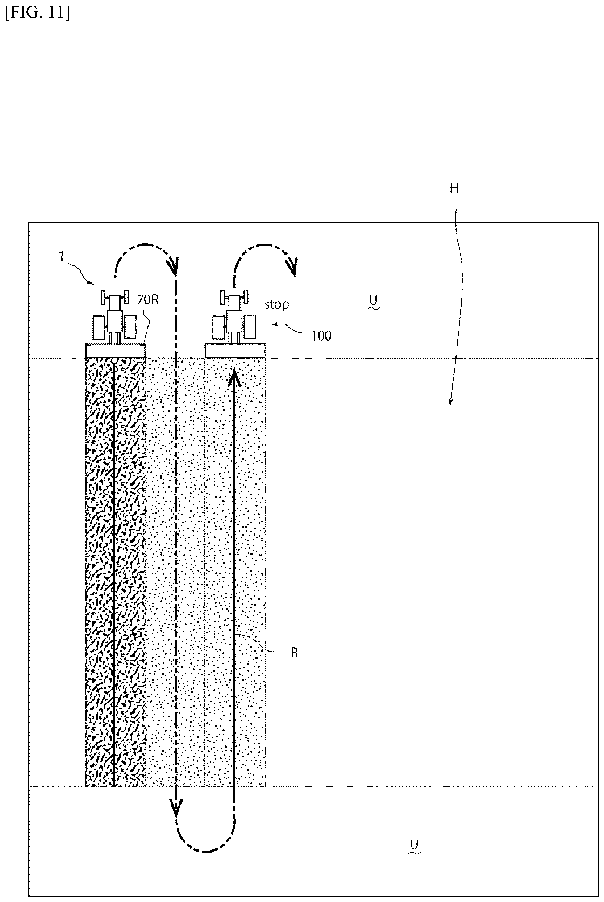

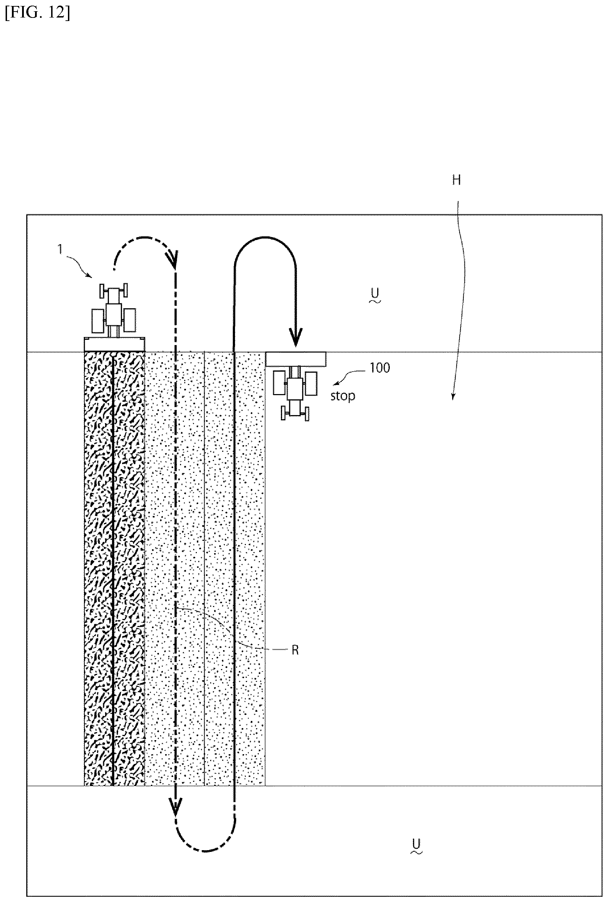

In a state where the first work vehicle 1 stops, the second work vehicle 100 continues work, and when the second work vehicle 100 enters the headland turning region U, as shown in Fig. 11, traveling is stopped, and the work is stopped to raise a work machine 140. Next, the second work vehicle 100 performs headland turning, and when the headland turning ends, as shown in Fig. 12, the second work vehicle 100 stops the traveling at a work start position (a position where it goes out of the headland turning region U) and lowers the work machine 140.

A headland turning end signal of the second work vehicle 100 is transmitted to the control device 30 of the first work vehicle 1 to permit the headland turning of the first work vehicle 1, and the first work vehicle 1 actuates the speed change means 44 to start the headland turning at a turning speed. Determination of the end of the headland turning of the second work vehicle 100 is performed by the detection means in any of the first to ninth examples.

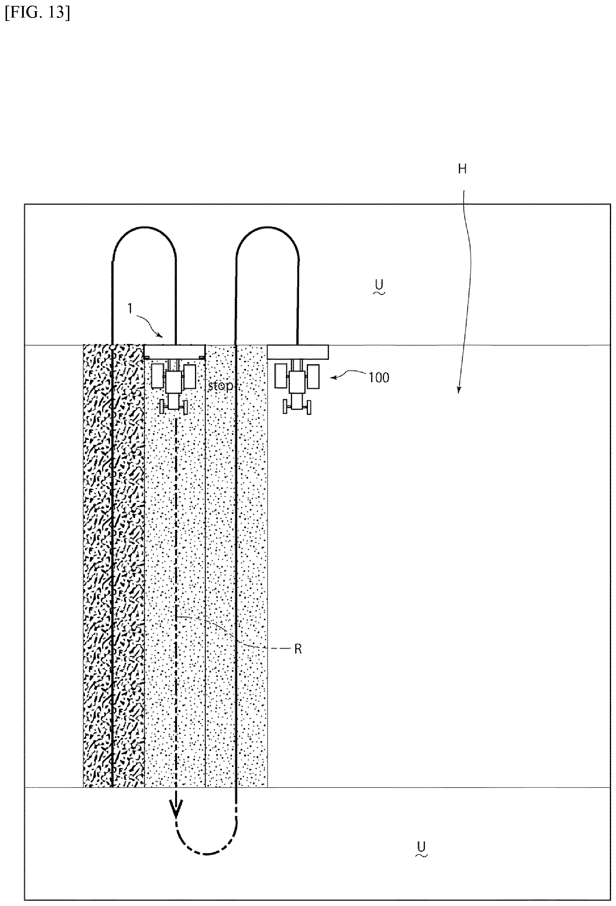

As shown in Fig. 13, when the first work vehicle 1 goes out of the headland turning region U, traveling is stopped, the raising/lowering actuator 25 is actuated to lower the rotary tilling device 24, and at the same time that the traveling starts, the work is restarted. When the first work vehicle 1 overtakes the second work vehicle 100 (refer to Fig. 6), the first work vehicle 1 protrudes the marker 70. The control device 30 transmits a second work vehicle 100 overtake signal through a communication device 110 to permit the traveling and the work of the second work vehicle 100, and the second work vehicle 100 restarts the traveling and the work.

In this manner, in the third embodiment, when the first work vehicle 1 and the second work vehicle 100 enter the headland turning region U, they stop the traveling and also stop the work. Moreover, when they go out the headland turning region U, the traveling is stopped and the work machines are lowered, and at the same time that the work starts, the traveling is started. Accordingly, when a seeding machine, a spreader, or the like is attached as the work machine, imprecise work such as scattering of seeds, a chemical at an entry position into the headland turning region U, and a departure position outside the headland turning region U is prevented.

### Industrial Applicability

The present invention is applicable to a remote operation device that remotely operates a remotely operable construction machine, agricultural work vehicle or the like.

### Reference Signs List

1: First work vehicle
30: Control device
40: Steering actuator
42: Camera
100: Second work vehicle

## Claims

1. An accompanying traveling work system in which a first work vehicle advancing in front in a front-back direction, and a second work vehicle advancing behind the first work vehicle perform work while traveling in a same direction, wherein
a control device of the first work vehicle and a control device of the second work vehicle can communicate through a communication device,
the first work vehicle and the second work vehicle are each provided with headland turning sensing means, and
when the first work vehicle enters a headland turning region, the first work vehicle is controlled to stop the traveling and the work.

2. The accompanying traveling work system according to claim 1, wherein when the second work vehicle ends headland turning, the traveling is stopped, a headland turning end signal of the second work vehicle is transmitted to the control device of the first work vehicle, and the first work vehicle is permitted to turn.

3. The accompanying traveling work system according to claim 1 or claim 2, wherein when the first work vehicle ends the headland turning, a headland turning end signal is transmitted to the control device of the second work vehicle, and the second work vehicle is permitted to restart the traveling and the work.

4. An accompanying traveling work system in which work is performed by a manned second work vehicle that performs pre-process work ahead, and an unmanned first work vehicle that performs post-process work, wherein
the first work vehicle includes a control device that positions a machine body, utilizing a satellite positioning system, and causes the first work vehicle to automatically travel along a set traveling route, and
the first work vehicle traveling diagonally in front includes markers, which are landmarks for an advancing direction of the second work vehicle traveling diagonally behind.

5. The accompanying traveling work system according to claim 4, wherein the markers can be attached to both right and left sides of the first work vehicle so as to be able to be protruded and contained.

6. The accompanying traveling work system according to claim 4, wherein when the first work vehicle reaches a field end, the first work vehicle temporarily stops, and when after the second work vehicle has performed headland turning, the first work vehicle performs the headland turning, and reaches a front side of the second work vehicle, the control device of the first work vehicle projects the markers on a second vehicle side.

7. A control device of a work vehicle, wherein in the accompanying traveling work system according to claims 1 to 6, the control device causes a first satellite positioning system and a second satellite positioning system to position current positions of the first work vehicle and the second work vehicle, and a display device to display the positions of the first work vehicle and the second work vehicle, the first satellite positioning system being mounted on the first work vehicle, and the second satellite positioning system with a lower accuracy than that of the first satellite positioning system being mounted on a remote operation device carried in the second work vehicle.
